# EUROPÄISCHE PATENTANMELDUNG

(11) **EP 0 727 723 A1**
(43) Veröffentlichungstag der Anmeldung: **21.08.1996**
(21) Anmeldenummer: 96102462.7
(22) Anmeldetag: 19.02.1996
(51) Int. Cl.: G05B 15/02, G05B 19/02, H02J 13/00, G05B 19/042

(54) **Steuerungssystem zur Ansteuerung von Einrichtungen im Haushaltsbereich**

(30) Priorität: 20.02.1995 DE 19505676
(71) Anmelder: Bosch-Siemens Hausgeräte GmbH, D-81669 München (DE)
(72) Erfinder: Lüdtke, Franz-Rüdiger, Dipl.-Ing., 13507 Berlin (DE); Meyer, Hans-Holger, Dipl.-Ing., 12689 Berlin (DE); Striek, Ralf-Jürgen, Dipl.-Ing., 13629 Berlin (DE); Witt, Wolf-Dieter, Dipl.-Ing., 10119 Berlin (DE)

(57) **Zusammenfassung**

Das Steuersystem für Einrichtungen im Haushalt weist eine zentrale Steuereinheit auf, mit welcher eine Mehrzahl von anzusteuernden Einheiten, insbesondere Haushaltsgeräte, ansteuertechnisch in Verbindung stehen; erfindungsgemäß enthält die zentrale Steuereinheit einen Speicherbereich zur Speicherung der Kenndaten der angeschlossenen, anzusteuernden Einheiten und eine bei Eingabe- von Kundendienst-Anforderungen ansteuerbare Abfragelogik zur Anzeige dieser Kenndaten.

## Beschreibung

Die vorliegende Erfindung bezieht sich auf ein Steuerungssystem zur Ansteuerung von Einrichtungen im Haushaltsbereich, insbesondere zur Ansteuerung von Haushaltsgeräten, bei welchen einer Mehrzahl von anzusteuernden Einheiten eine zentrale Steuereinheit zugeordnet ist, die über Datenwege mit den anzusteuernden Einheiten in Kommunikationsverbindung stehen.

Es sind bereits Kaushaltsgeräte mit eingebauter Steuerung bekannt, die alle autonom als eigenständige Einheiten funktionieren. Üblicherweise sind diese Steuereinrichtungen für Kaushaltsgeräte, wie Geschirrspülauatomaten, Waschmaschinen und Elektroherde so ausgebildet, daß sie mit einem spezifischen, ihre Funktionsablaufe steuernden Mikroprozessor oder einer elektrischen Steuereinheit versehen sind. Hierbei kann die elektronische Steuervorrichtung aus einem Mikroprozessor bestehen, der anstehende Signalgrößen über Analog-Digitalwandler erfaßt und aus diesen Signalgrößen Steuersignale ableitet, die für den Funktionsablauf des jeweiligen Haushaltsgeräts wesentlich sind. All diesen Steuereinrichtungen für Haushaltsgeräte ist gemeinsam, daß sie für jedes Gerät spezifisch angepaßt werden müssen, und daß jedes Haushaltsgerät somit ein solches Steuerteil benötigt. Es ist jedoch nicht möglich, die Funktionen verschiedener derartig ausgestatteter Haushaltsgeräte von einer Bedienungseinheit aus zu bedienen und zu steuern, bzw. verschiedene Funktionen dieser Kaushaltsgeräte untereinander zu verknüpfen. Auch ist es nicht möglich, die hierbei eingesetzten Haushaltsgeräte fernzubedienen oder fernzuüberwachen.

Von diesem Stand der Technik geht bereits ein Entwicklungsvorschlag aus, welcher einen Küchenblock mit elektronischer Steuereinrichtung beschreibt (DE-OS 31 20 723). Dieser Küchenblock zeichnet sich aus durch eine Halterung mit rasterartig angeordneten Kalteelementen, Energieversorgungselementen und Steuerungselementen, an der rasterartig eine Mehrzahl von Küchenmodulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist auch vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist, über ein optoelektronisches Kommunikations-Interface mit einem Lichtleiter-Datenbus verbunden, der mit den Küchengeräte-Modulen in Wirkverbindung steht und über ein weiteres optoelektronisches Kommunikations-Interface mit einem Lichtleiter-Datenbus verbunden ist, an den mindestens eine Kommunikationseinheit angeschlossen ist.

Diese bekannte Anordnung verweist auch auf den Vorteil, daß das zum Einsatz gebrachte lichtelektronische Steuersystem gleichzeitig in ein Haus-Kommunikationssystem einbezogen werden kann, so daß eine Fernbedienung und Fernüberwachung von jedem Ort im Hause über die Funktionsabläufe innerhalb der Küche möglich sind. So sind alle beispielsweise in der Küche für die Haushaltsgeräte vorzunehmenden Bedienungsvorgänge auf einem Zentral-Bediengerät zusammengefaßt und auf einem Zentral-Monitor zur Überwachung dargestellt, wobei auch der Zentral-Monitor mit einem Rundfunk/Stereo-Steuerteil verbunden sein kann, so daß gleichzeitig sowohl der Zentral-Monitor als auch das Zentral-Steuerteil als Radiogerät zur Information der Hausfrau innerhalb der Küche eingesetzt werden kann.

Aufbauend auf diesem Stand der Technik ist es Aufgabe der vorliegenden Erfindung, dieses System kundendienst- und reparaturdienstfreundlich auszustatten.

Ein Steuersystem, das diesen Anforderungen gerecht wird, ist erfindungsgemäß dadurch gekennzeichnet, daß die zentrale Steuereinheit einen Speicherbereich zur Speicherung der Kenndaten der angeschlossenen, anzusteuernden Einheiten und eine bei Eingabe von Kundendienst-Anforderungen ansteuerbare Abfragelogik zum Zwecke der Anzeige dieser Einheiten-Kenndaten enthält.

In dem erfindungsgemäß zum Einsatz gebrachten Speicherbereich für die Kenndaten der an dem System angeschlossenen Einheiten sind Informationen speicherbar und können abgerufen werden, die die jeweilige Einheit nach Art, Typ, Herstellungsdatum, Leistungsvermögen und Leistungsumfang, sowie von Komponentenhinweisen enthält. Diese Daten sind ergänzbar durch am Aufstellungsort erfaßbare Daten, beispielsweise um Daten, wann das Gerät aufgestellt wurde und wieviel Betriebsstunden das Gesamtgerät oder auch einzelne Funktionselemente oder -baugruppen in Funktion waren.

Nach einer bevorzugten Weiterbildung ist der erfindungsgemäß zum Einsatz gebrachte Speicherbereich erweitert für gemäß Vorgaben gespeicherte Parameter von durch die in den anzusteuernden Einheiten durchzuführenden Programmschritten und -abläufen und es ist eine Vergleichseinrichtung angeordnet, die diese gespeicherten Parameter mit während eines Programmablaufs meßtechnisch erfaßten Werten vergleicht.

Bevor in ein Gerät zu Kundendienstzwecken oder Reparaturzwecken eingegriffen werden muß, kann anhand der in dem erfindungsgemäß angeordneten Speicherbereich gespeicherten Kenndaten auf diese zurückgegriffen werden und es erübrigt sich der Einsatz von Reparaturanweisungs-Katalogen. Der Vergleich der gespeicherten (Soll-)Parameter der in den anzusteuernden Einheiten durchzuführenden Programmschritte und -abläufen mit den (Ist-)Werten während eines Programmablaufs durch meßtechnische Erfassung ermöglicht es, Abweichungen in der Betriebsweise festzustellen, die zu Fehlern und Ausführfällen führen können oder geführt haben. Damit können dem Kundendienst wertvolle Erkenntnisse für die Nachbesserungs-, Wartungs- und Reparaturmaßnahmen vorab zur Verfügung gestellt werden. Wenn die zentrale Steuereinheit gemäß einer besonderen Ausstattung des erfindungsgemäßen Steuersystems an ein z.B. öffentliches Kommunikationsnetz angeschlossen ist, sind die Informationen für den Kunden- bzw. Reparaturdienst auch fernabfragbar, so daß ohne Sichtung vor Ort bereits Vorsorge für mit hoher Wahrscheinlichkeit oder Sicherheit benötigter Ersatzteile prüfbar ist.

## Patentansprüche

1. Steuerungssystem zur Ansteuerung von Einrichtungen im Haushaltsbereich, insbesondere zur Ansteuerung von Haushaltsgeräten, bei welchen einer Mehrzahl von anzusteuernden Einheiten eine zentrale Steuereinheit zugeordnet ist, die über Datenwege mit den anzusteuernden Einheiten in Kommunikationsverbindung stehen, **dadurch gekennzeichnet**, daß die zentrale Steuereinheit einen Speicherbereich zur Speicherung der Kenndaten der angeschlossenen, anzusteuernden Einheiten und eine bei Eingabe von Kundendienst-Anforderungen ansteuerbare Abfragelogik zum Zwecke der Anzeige dieser Einheiten-Kenndaten enthält.

2. Steuerungssystem nach Anspruch 1, **dadurch gekennzeichnet**, daß die zentrale Steuereinheit Speicherbereiche zur Aufnahme von getätigten Betriebsabläufen nach Art und/oder Zeit enthält.

3. Steuerungssystem nach einem der Ansprüche 1 oder 2, **dadurch gekennzeichnet**, daß die gespeicherten Daten der zentralen Einheit fernabfragbar sind.

4. Steuerungssystem nach einem der Ansprüche 1 bis 3, **dadurch gekennzeichnet**, daß die gemäß Vorgaben gespeicherten Parameter von in den anzusteuernden Einheiten durchzuführenden Programmschritten und -abläufen mit während eines Programmablaufs meßtechnisch erfaßten Werten in einer Vergleichseinrichtung erfaßbar und Soll-Ist-Abweichungen zur weiteren Veranlassung und/oder abrufbaren Abspeicherung heranziehbar sind.
